# EUROPÄISCHE PATENTSCHRIFT

(11) **EP 3 486 929 B1**
(45) Veröffentlichungstag und Bekanntmachung des Hinweises auf die Patenterteilung: **21.08.2024**
(21) Anmeldenummer: 18207515.0
(22) Anmeldetag: 21.11.2018
(51) Int. Cl.: H01F 38/14, H01F 27/02, B60L 53/12, H01F 27/36, H02J 7/00, H02J 50/10, H02J 7/02, H02J 50/00, H02J 50/70

(54) **INDUKTIVE LADEANORDNUNG**
INDUCTIVE CHARGING ARRANGEMENT
DISPOSITIF DE CHARGE INDUCTIF

(30) Priorität: 21.11.2017 DE 102017127459
(43) Veröffentlichungstag der Anmeldung: 22.05.2019
(73) Patentinhaber: Zollner Elektronik AG, 93499 Zandt (DE)
(72) Erfinder: Kasparbauer, Konrad, 93444 Bad Kötzting (DE)
(74) Vertreter: Hannke Bittner & Partner mbB Regensburg

(56) Entgegenhaltungen:
- EP-A1- 3 467 854
- EP-A2- 3 179 493
- DE-A1- 102011 116 250
- DE-A1- 102012 105 037
- DE-A1- 102012 202 472
- DE-A1- 102013 010 695
- DE-A1- 102013 015 424

## Beschreibung

Die vorliegende Erfindung bezieht sich auf eine induktive Ladeanordnung, insbesondere zum induktiven Laden von Kraftfahrzeugen. Aus dem Stand der Technik ist es bereits bekannt, Kraftfahrzeuge induktiv zu laden. Dabei wird üblicherweise eine erste Spuleneinheit eingesetzt, die beispielsweise an einem Boden oder in einem Boden integriert sein kann. Eine weitere Spuleneinrichtung ist in dem zu ladenden Fahrzeug angeordnet. Das Fahrzeug wird gegenüber dieser Spuleneinrichtung positioniert und anschließend kann ein Laden berührungslos und induktiv erfolgen. Diese Ladeanordnung ist daher aus mehreren Gründen unterschiedlichsten Belastungen ausgesetzt.

So kann die Ladeanordnung beispielsweise Gewichtsbelastungen ausgesetzt sein, etwa dann, wenn Personen sie betreten. Daneben sind derartige Ladeanordnungen auch teilweise hohen Temperaturschwankungen ausgesetzt. Daneben sind derartige Ladeanordnungen auch der Gefahr von Verschmutzungen ausgesetzt, oder auch dem Eindringen von Wasser gegenüber gefährdet.

DE 10 2012 202472 A1 offenbart eine induktive Ladeanordnung, insbesondere zum induktiven Laden von Kraftfahrzeugen, mit einer Spuleneinrichtung und mit einer benachbart zu der Spuleneinrichtung angeordneten Ferritplattenanordnung, die beidseits ein Abdeckelement aufweist. Eines dieser Abdeckelemente kann als Gummiplatte ausgebildet sein.

DE 10 2013 015424 A1, DE 10 2011 116250 A1, DE 10 2012 105037 A1, DE 10 2013 010695 A1 und EP 3 179 493 A2 offenbaren weitere induktive Ladeanordnungen mit einer Spuleneinrichtung und mit einer benachbart zu der Spuleneinrichtung angeordneten Ferritplattenanordnung.

Der vorliegenden Erfindung liegt daher die Aufgabe zugrunde, eine induktive Ladeanordnung bereitzustellen, welche insbesondere den unterschiedlichsten Belastungen gewachsen ist. Weiterhin soll diese Ladeanordnung auch eine noch vertretbare Gesamtdicke aufweisen, um so günstig eingebaut bzw. integriert werden zu können.

Diese Aufgaben werden erfindungsgemäß durch den Gegenstand des unabhängigen Patentanspruchs erreicht. Vorteilhafte Ausführungsformen und Weiterbildungen sind Gegenstand der Unteransprüche.

Eine induktive Ladeanordnung, insbesondere zum induktiven Laden von Kraftfahrzeugen, weist eine Spuleneinrichtung auf, sowie eine benachbart zu der Spuleneinrichtung angeordnete Ferritplattenanordnung. Erfindungsgemäß ist an einer ersten Oberfläche der Ferritplattenanordnung ein erstes diese Ferritplattenanordnung abdeckendes Abdeckelement angeordnet und an einer zweiten Oberfläche der Ferritplattenanordnung, welche der ersten Oberfläche der Ferritplattenanordnung gegenüberliegt, ein zweites diese Ferritplattenanordnung abdeckendes Abdeckelement, wobei die Ferritplattenanordnung zwischen dem ersten Abdeckelement und dem zweiten Abdeckelement angeordnet ist und wobei wenigstens ein Abdeckelement zwischen der Ferritplattenanordnung und der Spuleneinrichtung verläuft.

Es wird daher vorgeschlagen, dass die Ferritplattenanordnung zwischen zwei Abdeckelementen angeordnet ist, und dabei wie unten genau erläutert, diese beiden Abdeckelemente insbesondere an der Ferritplattenanordnung angeklebt sind. Bei der Ferritplattenanordnung handelt es sich um ein sehr sensibles Element, welches insbesondere auch vor Brüchen zu schützen ist. Die Abdeckanordnung soll insbesondere auch verhindern, dass Splitter der Ferritplattenanordnung in andere Bereiche der Ladeanordnung gelangen.

Erfindungsgemäss ist die Ferritplattenanordnung segmentiert aufgebaut. Dies bedeutet, dass die Ferritplattenanordnung eine Vielzahl von Segmenten aufweist, die bezüglich einander beweglich sind. Dabei können um die einzelnen Segmente jeweils O-ringartige Körper angeordnet sein, sodass die Segmente bezüglich einander beweglich sind, bzw. schwimmend bezüglich einander gelagert sind. Bevorzugt ist daher die Ferritplattenanordnung aus einer Vielzahl derartiger Segmente aufgebaut. Diese Segmente können aneinander in der Art einer Matrix angeordnet sein.

Bei einer weiteren vorteilhaften Ausführungsform ist die Ferritplattenanordnung unterhalb der Spuleneinrichtung angeordnet. Die Begriffe "oberhalb" und "unterhalb" beziehen sich dabei auf den Montagezustand der Ladeanordnung, beispielsweise einen Zustand, in dem die Ladeanordnung in einen Boden integriert ist.

Bei einer weiteren vorteilhaften Ausführungsform sind die Abdeckelemente elastisch ausgebildet. Dies bedeutet, dass auch die Abdeckelemente, selbst wenn sie mit der Ferritplattenanordnung verbunden sind, eine gewisse Beweglichkeit der Ferritplattenanordnung ermöglichen.

Auf diese Weise können die Abdeckelemente mehrere Aufgaben erfüllen. So können sie die Ferritplatten bzw. die Ferritplattenanordnung fixieren und/oder diese vor Belastungen schützen. Weiterhin können diese Abdeckelemente auch dazu dienen, um Abweichungen hinsichtlich der einzelnen Segmente und/oder Abweichungen hinsichtlich der gesamten Ferritplattenanordnung auszugleichen, insbesondere Abweichungen von der idealen Quaderform (beispielsweise Winkelabweichungen und/oder Ebenheitsabweichungen.

Schließlich können die Abdeckelemente die Ferritplatten umhüllen und insbesondere auch nach einem Bruch der Ferritsegmente umhüllen so dass keine Splitter in andere Bereiche der Ladeanordnung fallen.

Vorteilhaft verläuft das Abdeckelement in der Ebene der Ferritplatten. Besonders bevorzugt sind diese Abdeckelemente elastisch in der Ebene der Ferritplatten und besonders bevorzugt auch elastisch in einer hierzu senkrechten Richtung. Auf diese Weise ist ein besonders effizienter Schutz der Ferritplatten möglich. Erfindungsgemäss sind beide Abdeckelemente aus einem Kautschuk hergestellt. Erfindungsgemäss handelt es sich bei dem Kautschuk um einen Butylkautschuk. Bei einer besonders bevorzugten Ausführungsform ist die Dicke des Abdeckelements wenigstens 0,1 mm, bevorzugt wenigstens 0,2 mm, bevorzugt wenigstens 0,4 mm und besonders bevorzugt wenigstens 0,8 mm. Bei einer weiteren bevorzugten Ausführungsform ist die Dicke des Abdeckelements geringer als 5 mm, bevorzugt geringer als 4 mm, bevorzugt geringer als 3 mm und besonders bevorzugt geringer als 2,0 mm.

Bei einer besonders bevorzugten Ausführungsform weist das Abdeckelement eine Klebeschicht auf, und insbesondere an der den Ferritplatten zugewandten Seite eine entsprechende Klebeschicht auf. Dabei weist diese Klebeschicht eine sehr hohe Oberflächenklebrigkeit auf, die insbesondere umgehend nach der Kontaktierung auftritt. Bevorzugt ist diese Klebrigkeit auch alterungsbeständig und weist keinen Schwund auf. Daneben ist das Abdeckelement auch UV-beständig und/oder wasserdicht.

Wie bereits genannt, sind die Abdeckelemente aus Butylkautschuk hergestellt. Butyl bringt durch seine Materialeigenschaften bereits eine sehr gute Haftfestigkeit. Auf diese Weise kann ggfs. auf eine zusätzliche Klebeschicht verzichtet werden. Bevorzugt kann also der Butylkautschuk direkt an der Ferritplattenanordnung angeklebt werden.

Daneben kann auch wenigstens ein Abdeckelement und können bevorzugt auch beide Abdeckelemente an der oder den der Ferritplattenanordnung abgewandten Seite eine Klebebeschichtung aufweisen.

Alternativ wäre es auch denkbar, dass keine weitere Klebebeschichtung vorgesehen ist. Das Abdeckelement kann sehr dünn ausgeführt sein, was bei Vorhandensein einer Klebeschicht die Verarbeitbarkeit beeinträchtigen könnte. Bei einer bevorzugten Ausführungsform kann ein innenliegendes Gewebe vorgesehen sein, also ein Gewebe, welches zwischen dem Abdeckelement und der Ferritplattenanordnung befindlich ist. Ein derartiges innenliegendes Gewebe verbessert die Verarbeitbarkeit und es kann weiterhin eine beidseitige Klebung erreicht werden.

Daneben kann das Abdeckelement (ggfs. auch zusätzlich zu dem Gewebe eine außen liegende Verstärkung aufweisen, etwa ein Folienmaterial. Eine derartige Folie bietet den Vorteil, dass sie besser zu verarbeiten ist und weiterhin auch die Eigenschaften von bestimmten Folien, wie etwa eine Verbesserung der Isolation genutzt werden können.

Allgemein ist das wenigstens eine Abdeckelement und sind bevorzugt beide Abdeckelemente als flächige Elemente ausgeführt. Bevorzugt bedeckt das wenigstens eine Abdeckelement diejenige Oberfläche der Ferritplattenanordnung, an der es angeordnet ist vollständig.

Dabei kann dieses Abdeckelement selbst wiederum einen Träger aufweisen, auf dem die eigentliche Klebeschicht angeordnet ist. Bevorzugt handelt es sich bei dem verwendeten Klebstoff um einen Butylkautschuk. Besonders bevorzugt weist der Butylkautschuk und/oder die Trägerfolie eine Dichte auf, welche zwischen 1,05 g/cm³ und 1,30 g/cm³ liegt. Weiterhin weist bevorzugt das Abdeckelement einen Temperaturbereich (d.h. einen Temperaturbereich, in dem dieses Abdeckelement beständig ist) auf, der zwischen -40 °C und +180 °C liegt. Auf diese Weise kann die Ladeanordnung auch unter sehr hohen Temperaturunterschieden eingesetzt werden.

Bei einer weiteren vorteilhaften Ausführungsform ist zwischen der Spuleneinrichtung und der Ferritplattenanordnung eine Lastverteilplatte angeordnet. Diese Lastverteilanordnung bzw. Lastverteilplatte kann bewirken, dass auf die Vorrichtung bzw. Lastverteilanordnung aufgeteilte Kraft gleichmäßig verteilt wird. Auf diese Weise kann die Lastanordnung auch hohen Gewichtskräften standhalten, ohne dass es zu Brüchen oder dergleichen kommt.

Bei einer weiteren vorteilhaften Ausführungsform ist diese Lastverteilplatte aus Aluminium hergestellt. Besonders bevorzugt weist dies Lastverteilplatte eine Dicke auf, die größer ist als 1 mm, bevorzugt größer als 2 mm, bevorzugt größer als 3 mm und bevorzugt größer als 4 mm. Bei einer weiteren vorteilhaften Ausführungsform weist die Lastverteilplatte eine Dicke auf, die geringer ist als 20 mm, bevorzugt geringer als 15 mm, bevorzugt geringer als 10 mm und besonders bevorzugt geringer als 8 mm. Diese Dicken haben sich als besonders geeignet erwiesen, um einerseits eine hohe Widerstandsfähigkeit zu gewährleisten und um andererseits die Gesamthöhe der Anordnung gering zu gestalten.

Bei einer weiteren vorteilhaften Ausführungsform ist noch eine weitere Lastverteilplatte vorgesehen, welche besonders bevorzugt oberhalb der Spuleneinrichtung liegt. Besonders bevorzugt liegt die Spuleneinrichtung zwischen diesen beiden Lastverteilplattenanordnungen.

Bei einer weiteren bevorzugten Ausführungsform sind diese beiden Lastverteilplatten durch Verbindungsquerstege miteinander verbunden bzw. gegenseitig abgestützt.

Bei einer weiteren vorteilhaften Ausführungsform ist unterhalb der Ferritplattenanordnung ein Träger angeordnet. Bei diesem Träger kann es sich beispielsweise um einen Sicherheitsboden handeln, der insbesondere zum Stützen bzw. Abstützen auch der Ferritplattenanordnung bestimmt ist. Diese Träger kann dabei eine oder eine Vielzahl von Aussparungen aufweisen, und/oder er kann auch eine Gitterstruktur aufweisen. Auf diese Weise wird einerseits das Gewicht verringert und auf der anderen Seite eine Stabilität der Anordnung erreicht.

Bei einer weiteren vorteilhaften Ausführungsform ist wie oben erwähnt auch oberhalb der Spuleneinrichtung eine Lastverteilplatte angeordnet und damit sind besonders bevorzugt insgesamt beidseitig Lastverteilplatten vorgesehen.

Bei einer weiteren vorteilhaften Ausführungsform weist die Ladeanordnung eine Bodenplatte und/oder eine Deckelplatte auf. Dabei ist es möglich, dass diese Bodenplatte aus Aluminium besteht. Diese Bodenplatte kann dabei eine Dicke aufweisen, die größer ist als 1 mm, bevorzugt größer als 2 mm. Bevorzugt weist diese Aluplatte eine Dicke auf, die geringer ist als 10 mm, bevorzugt geringer als 8 mm und bevorzugt geringer als 5 mm.

Diese Aluplatte kann dabei auch als Abschirmelement fungieren, insbesondere um unter der Ladeanordnung liegende Stahlelemente, wie etwa armierten Stahlbeton nicht durch die verwendeten Magnetfelder zu erhitzen.

Bei einer weiteren vorteilhaften Ausführungsform weist die Bodenplatte eine Dicke auf, welche größer ist als 10mm, bevorzugt in einem Bereich zwischen 10mm und 40mm, bevorzugt zwischen 10mm und 30mm.

Erfindungsgemäss weist die Bodenplatte in ihrem Inneren wenigstens einen Kanal zum Leiten eines Kühlmediums, etwa einer Kühlflüssigkeit auf. So kann die Bodenplatte beispielsweise Bohrungen und/oder Kanäle aufweisen, um eine Flüssigkeitskühlung, insbesondere eine Wasserkühlung einzubringen. Auf diese Weise kann Verlustwärme günstiger aus dem System abtransportiert werden.

Bei einer weiteren vorteilhaften Ausführungsform kann auch die Deckelplatte eine Dicke aufweisen, die größer ist als 1 mm, bevorzugt größer als 2 mm. Besonders bevorzugt weist auch die Deckelplatte eine Dicke auf, die kleiner 10 mm und bevorzugt kleiner als 8 mm. Bei einer weiteren bevorzugten Ausführungsform kann zwischen dieser Deckplatte unter der Lastverteilplatte eine weitere Zwischenschicht angeordnet sein, insbesondere eine Zwischenschicht aus einem elastischen Material.

Erfindungsgemäss ist die Deckelplatte als Hitzeschutzelement ausgebildet.

Bei einer weiteren vorteilhaften Ausführungsform weist die Ladeanordnung eine die Spuleneinrichtung und/oder die Ferritplattenanordnung in Umfangsrichtung umgebende Begrenzungswandung auf. Auf diese Weise kann erreicht werden, dass die Ladeanordnung insgesamt spritzwassergeschützt ist und auch gegen mechanische Einwirkungen von außen geschützt ist.

Bei einer weiteren vorteilhaften Ausführungsform weist die Ladeanordnung eine Elektronikplatine auf, welche benachbart zu der Spuleneinrichtung angeordnet ist. Mittels dieser Elektronikeinrichtung können insbesondere die Spuleneinrichtung und auch der Ferritkörper und auch etwaige Positionssensoren angesteuert werden. Besonders bevorzugt ist diese Elektronikplatine seitlich neben der Spuleneinrichtung und/oder der Ferritplattenanordnung angeordnet. Besonders bevorzugt ist zwischen der Elektronikplatine und der Spuleneinrichtung eine Wandung angeordnet, und insbesondere diejenige Umfangswandung, die wie oben beschrieben die Spuleneinrichtung und/oder die Ferritplattenanordnung umgibt.

Besonders bevorzugt sind auf der Elektronikplatine Elektronikelemente angeordnet und insbesondere auch eine Leistungselektronik.

Besonders bevorzugt weist die Vorrichtung einen Kühlkörper insbesondere zum Kühlen der Elektronikelemente auf. Dieser Kühlkörper kann dabei seitlich neben der Elektronikplatine angeordnet sein. Dieser Kühlkörper kann dabei, wie an sich aus dem Stand der Technik bekannt, eine Vielzahl von nebeneinander angeordneten Kühlerrippen aufweisen. Dieser Kühlkörper kann dabei eine Wärmeleitfähigkeit aufweisen, die größer ist als 150 W/mK, bevorzugt größer als 170 W/mK, besonders bevorzugt größer als 200 W/mK.

Bei einer weiteren vorteilhaften Ausführungsform weist die gesamte Ladeanordnung eine Höhe auf, die geringer ist als 150 mm, bevorzugt geringer als 120 mm, bevorzugt geringer als 100 mm und besonders bevorzugt geringer als 80 mm. Besonders bevorzugt weist die Ladeanordnung eine Höhe auf, die größer ist als 20 mm, bevorzugt größer als 40 mm, bevorzugt größer als 60 mm. Durch diese Ausgestaltung kann einerseits eine hohe Stabilität erreicht werden, andererseits jedoch auch ein noch akzeptabler Bauraum gewährleistet werden.

Besonders bevorzugt ist die Spulenanordnung in einem Bereich der Lastverteilplatte angeordnet. Diese Lastverteilplatte kann dabei Stützstege aufweisen, welche insbesondere auch zum Halten der Spuleneinrichtung dienen. Dabei ist es auch möglich, dass vereinzelte derartige Stützstege durch einen Bereich der Spulenanordnung hindurchtreten.

Bei einer weiteren vorteilhaften Ausführungsform stehen das erste Abdeckelement und das zweite Abdeckelement wenigstens abschnittweise unmittelbar miteinander in Kontakt. So ist es denkbar, dass die beiden Abdeckelemente seitlich (zumindest auf einer Seite, bevorzugt auf mehreren Seiten) über die Ferritplattenanordnung über diese hinausstehen. In diesen Bereichen sind bevorzugt die Abdeckelemente mittelbar und/oder unmittelbar miteinander verklebt. Auf diese Weise ist es möglich, dass die Ferritplattenanordnung wenigstens einseitig, bevorzugt mehrseitig und besonders bevorzugt allseitig von den Abdeckelementen eingeschlossen ist. Auch wäre es denkbar, dass die Abdeckelemente gemeinsam taschenartig ausgebildet sind und die Ferriplattenanordnung in diesem taschenartigen Gebilde angeordnet ist.

Bei einer weiteren vorteilhaften Ausführungsform weist die Vorrichtung Leitungsrohre zum Führen von elektrischen Leitungen auf. Dabei können diese Leitungsrohre beispielsweise dazu dienen, elektrische Verbindungsleitungen zwischen der Elektronik und der Spuleneinrichtung und/oder der Elektronik und einer Positionserfassungseinrichtung zu führen.

Besonders bevorzugt weist die Vorrichtung Lageerkennungselemente auf, welche dazu geeignet und bestimmt sind, die Position einer weiteren Spulenanordnung etwa einer in einem Fahrzeug angeordnete Spulenanordnung gegenüber der Ladeanordnung zu erfassen. Zu diesem Zweck kann die Positionserfassungseinrichtung eine Vielzahl von Spulen aufweisen, die insbesondere dazu geeignet sind, eine Position einer weiteren Spuleneinrichtung in x-Richtung und/oder in y-Richtung zu erfassen. Besonders bevorzugt sind dabei derartige Positionsschleifen auf dem Ferritkörper bzw. den Ferritelementen angeordnet. Dabei ist es besonders bevorzugt denkbar, dass diese Leitungsverbindungen mittels Steckverbindungen mit der Vorrichtung verbunden sind bzw. mit der Elektronik verbunden sind.

Bei einer besonders bevorzugten Ausführungsform weist die Ladeanordnung einen Bauraum für eine Spulenelektronik auf und/oder einen weiteren Bauraum für eine Positionsspulenelektronik. Diese beiden Bauräume können besonders bevorzugt in einer Dickenrichtung der Anordnung übereinander angeordnet sein.

Erfindungsgemäss werden die Ferritplattensegmente auf einem weichen Material aufgelegt, nämlich auf Butylkautschuk, welches insbesondere, wie oben erwähnt auf der den Segmenten zugewandten Oberfläche eine Adhäsion aufweist bzw. eine Adhäsion mit der Ferritplattenanordnung eingeht. Als Träger dieses weichen Materials kann ein Aluminium oder Kunststoffgehäuse verwendet werden. Zur besseren Verarbeitung des Materials kann eine Trägerfolie und/oder ein Gewebe eingesetzt werden, um die Montage zu erleichtern. Die Trägerfolie auf der dem Ferrit abgewandten Seite kann auch im Gerät bzw. in der Ladeanordnung verbleiben, insbesondere wenn eine Haftung der Ferritanordnung zu dem Gehäuse nicht erforderlich ist.

Die überstehenden Seiten bzw. Bereiche der Abdeckelemente können zur seitlichen Einhüllung der Ferritplattenanordnung hochgeklappt sein.

Bei einer weiteren vorteilhaften Ausführungsform kann wenigstens einseitig an der Ferritplattenanordnung eine Netzstruktur und/oder Gewebestruktur angeordnet sein. Auf diese Weise kann ein Vorfixieren der Ferritplattenanordnung bzw. der einzelnen Ferritplattensegmente erreicht werden. Unter Verwendung dieser Netzstruktur und/oder dieses Gewebes können die einzelnen Ferritplattensegmente zur Montage vorfixiert werden (beispielsweise mittels eines Gewebebands). Dieses Gewebe dient als Träger der Einzelferritsegmente. Auf diese Weise kann das Einlegen der Ferritplattensegmente beschleunigt werden.

Wenn das Abdeckelement dick genug ist, kann diese Gewebe- oder Netzstruktur auch auf einer Unterseite der Ferritplattenanordnung angeordnet sein und sich so in dieses Abdeckelement eindrücken.

Weitere Vorteile und Ausführungsformen ergeben sich aus den beigefügten Zeichnungen.

Darin zeigen:
- Fig. 1: Eine Darstellung eines Teils einer erfindungsgemäßen Anordnung in einer ersten Ausführungsform;
- Fig. 2: eine Schnittdarstellung der in Figur 1 gezeigten Darstellung;
- Fig. 3: eine Detaildarstellung der in Figur 2 gezeigten Darstellung;
- Fig. 4: eine Darstellung einer weiteren Ausführungsform einer nicht-erfindungsgemäßen Ladeanordnung;
- Fig. 5: eine Schnittdarstellung der in Figur 4 gezeigten Anordnung;
- Fig. 6: eine vergrößerte Darstellung der in Figur 5 gezeigten Darstellung;
- Fig. 7: eine Teildarstellung einer erfindungsgemäßen Anordnung;
- Fig. 8: eine Schnittdarstellung einer erfindungsgemäßen Anordnung;
- Fig. 9: eine Schrägansicht einer erfindungsgemäßen Anordnung;
- Fig. 10: eine Detailansicht der Elektronikeinheit einer erfindungsgemäßen Anordnung;
- Fig. 11: eine Detailansicht einer erfindungsgemäßen Anordnung.

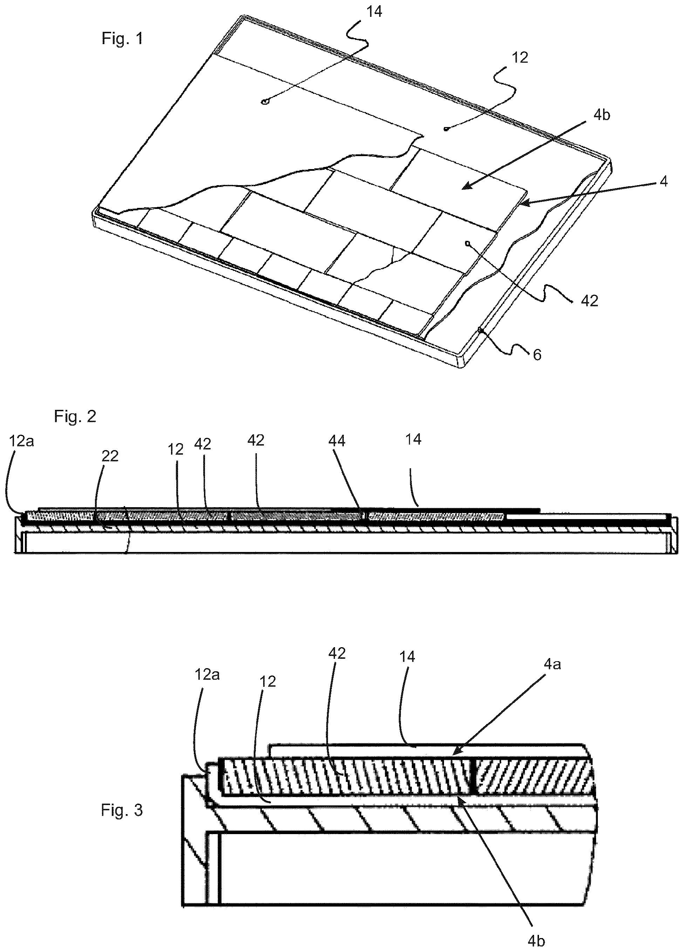

Figur 1 zeigt eine Ansicht einer Ferritsegmentanordnung für eine erfindungsgemäße Ladeanordnung. Dabei bezieht sich das Bezugszeichen 6 auf ein Gehäuse, in dem eine in ihrer Gesamtheit mit 4 bezeichnete Ferritplattenanordnung angeordnet ist. Diese Ferritplattenanordnung weist dabei eine zweite Oberfläche 4b auf, die hier nach oben gerichtet ist. Eine gegenüberliegende erste Oberfläche 4a ist in Figur 1 nicht gezeigt. Das Bezugszeichen 42 kennzeichnet ein Ferritsegment. Die Ferritplattenanordnung setzt sich aus einer Vielzahl derartiger Segmente zusammen. Bevorzugt sind diese Segmente 42 bezüglich einander beweglich gelagert.

Bezugszeichen 12 bezieht sich auf ein erstes Abdeckelement, welches hier unterhalb der Ferritplattenanordnung 4 angeordnet ist. Das Bezugszeichen 14 kennzeichnet ein zweites Abdeckelement, welches hier oberhalb der Ferritplattenanordnung angeordnet ist. Die Ferritplattenanordnung ist damit zwischen diesen beiden Abdeckelementen 12, 14 aufgenommen.

Figur 2 zeigt eine Seitenansicht der in Figur 1 gezeigten Anordnung. Dabei sind wieder die einzelnen Segmente 42 der Ferritplattenanordnung 4 erkennbar. Zwischen diesen Segmenten befinden sich jeweils elastische Elemente 44, welche bewirken, dass die einzelnen Segmente bezüglich einander beweglich sind. Gezeigt ist auch wieder das erste Abdeckelement 12, welches hier unterhalb der Ferritplattenanordnung angeordnet ist. Ein Abschnitt 12a ist hochgeklappt und steht seitlich über die Ferritplattenanordnung hinaus. Das Bezugszeichen 22 kennzeichnet einen Träger, der unterhalb des ersten Abdeckelements 12 angeordnet ist.

Figur 3 zeigt eine vergrößerte Darstellung der in Figur 2 gezeigten Vorrichtung. Auch hier sind wieder die beiden Abdeckelemente 12 und 14 erkennbar, sowie auch der umgeklappte Abschnitt 12a.

Die Bezugszeichen 4a und 4b beziehen sich auf die beiden Oberflächen der Ferritplattenanordnung, welche sich gegenüberliegen.

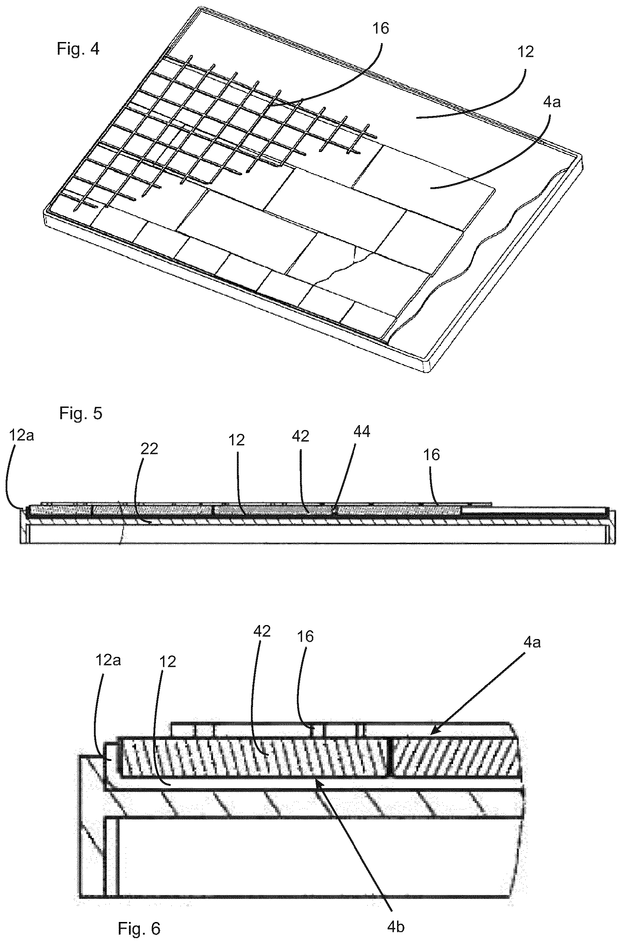

Die Figuren 4 bis 6 zeigen in ähnlicher Weise eine Anordnung wie in den Figuren 1 bis 3, die jedoch nicht Teil der Erfindung ist.

Der wesentliche Unterschied hier ist, dass anstelle des zweiten Abdeckelements 14 eine Netzstruktur 16 vorgesehen ist, welche hier auf der Ferritplattenanordnung 4 bzw. der Oberfläche 4a aufliegt. Diese Netz- bzw. Gewebestruktur kann ebenfalls zur Stabilität der Anordnung beitragen. Allerdings ist auch hier das erste Abdeckelement 12 vorgesehen.

Auch in den Figuren 5 und 6 ist eine entsprechende Darstellung erkennbar, wobei hier wie erwähnt das erste Abdeckelement durch die Gewebe- bzw. Netzstruktur 16 ersetzt ist.

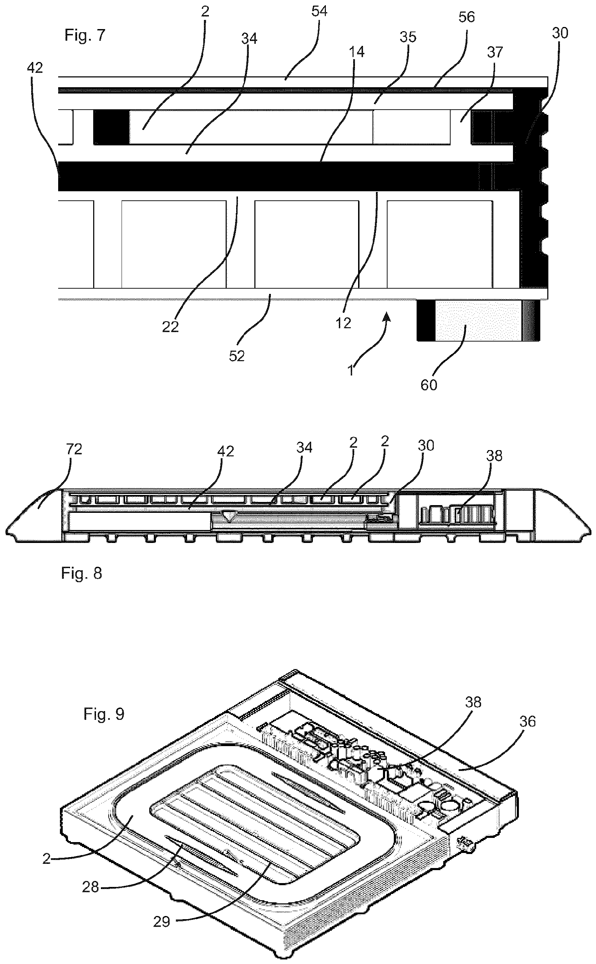

Figur 7 zeigt eine teilweise Darstellung einer erfindungsgemäßen Ladeanordnung 1. Hier ist eine Spule 2 dargestellt, welche oberhalb der Ferritplattenanordnung 4 bzw. den Segmenten 42 der Ferritplattenanordnung angeordnet ist. Das Bezugszeichen 34 kennzeichnet ein erstes Trägerelement, welches unterhalb der Spuleneinrichtung 2 und hier oberhalb der Ferritplattenanordnung 4 vorgesehen ist. Die Bezugszeichen 12 und 14 kennzeichnen wiederum die beiden Abdeckelemente, die aus einem Butylkautschuk hergestellt sind.

Das Bezugszeichen 30 kennzeichnet eine Umgebungswandung, welche die Ferritplattenanordnung 4 und auch die Spuleneinrichtung 2 umgibt.

Das Bezugszeichen 22 kennzeichnet eine Trägerplatte, welche die Ferritplattenanordnung 4 abstützt. Das Bezugszeichen 52 kennzeichnet ein Bodenelement, welches hier als Aluplatte ausgeführt ist. Das Bezugszeichen 54 kennzeichnet ein Deckelelement, welches bevorzugt ebenfalls als Aluplatte ausgeführt ist. Das Bezugszeichen 56 kennzeichnet ein Hitzeschutzelement, welches zwischen dem Deckelelement 54 und einem weiteren Trägerelement 35 angeordnet ist. Die beiden Trägerelemente 34 und 35 sind mittels Stützstegen 37 gegeneinander abgestützt. Zwischen den Trägerelementen 34 und 35 ist auch die Spuleneinrichtung 2 angeordnet.

Figur 8 zeigt eine weitere Seitenansicht der erfindungsgemäßen Ladeanordnung. Bei dieser Darstellung ist wiederum die Umfangsformung 30 erkennbar sowie hier auch eine Elektronikeinheit 38, die sich rechts neben der Spuleneinrichtung 2 befindet. Weiterhin ist auch hier wieder ein Ferritplattensegment 42 dargestellt. Das Bezugszeichen 72 kennzeichnet eine die gesamte Vorrichtung umgebende Wand. Diese Wand kann aus einem elastischen Material, etwa einem Hartgummi hergestellt sein. Die gesamte Ladeanordnung 1 kann beispielsweise in einem Boden integriert sein.

Figur 9 zeigt eine Darstellung einer geöffneten Ladeanordnung. Hier ist insbesondere die Spuleneinrichtung 2 erkennbar sowie Abstützelemente 28, welche hier durch die Spuleneinrichtung 2 verlaufen. Weitere Stützstege sind mit dem Bezugszeichen 29 gekennzeichnet. Auf diese Weise können Belastungen von der Spuleneinrichtung 2 ferngehalten werden.

Das Bezugszeichen 36 kennzeichnet eine Kühleinrichtung, wie etwa einen Kühlkörper, der seitlich neben der Elektronikeinheit angeordnet sein kann.

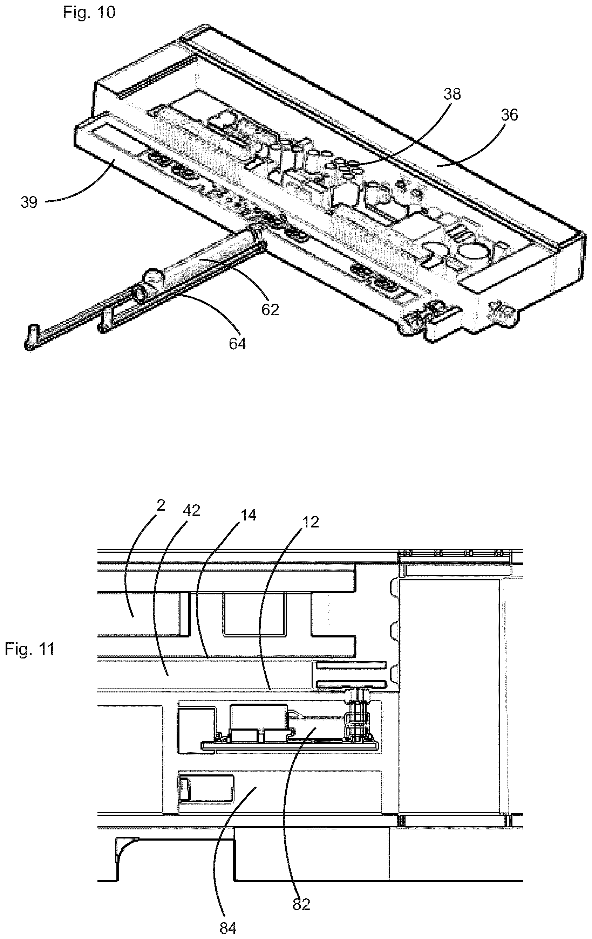

Figur 10 zeigt eine weitere Teildarstellung der erfindungsgemäßen Ladeanordnung. Hier ist wieder die Elektronikeinheit 38 erkennbar, an der seitlich die Kühleinrichtung 36 angeordnet ist. Die Bezugszeichen 62 und 64 kennzeichnen zwei Leitungsrohre, durch welche beispielsweise elektrische Verbindungsleitungen verlaufen können. Das Bezugszeichen 39 kennzeichnet ein Andockelement, mittels dessen die Elektronikeinheit 38 an einem Bereich der Spuleneinrichtung oder des üblichen Aufbaus angedockt werden kann.

Figur 11 schließlich zeigt eine Detaildarstellung der erfindungsgemäßen Ladeanordnung.

Auch hier ist wieder die Spuleneinrichtung 2 erkennbar sowie auch die Abdeckelemente 12 und 14, zwischen denen die Ferritplattenanordnung 4 angeordnet ist. Das Bezugszeichen 84 kennzeichnet einen Bauraum, der zur Aufnahme einer Spulenelektronik dient und das Bezugszeichen 82 kennzeichnet einen weiteren Bauraum, der beispielsweise zur Aufnahme von Positionsspulenelektronik dient.

Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Ladeanordnung
- 2: Spule
- 4: Ferritplattenanordnung
- 4a: erste Oberfläche der Ferritplattenanordnung
- 4b: zweite Oberfläche der Ferritplattenanordnung
- 6: Gehäuse
- 12: erstes Abdeckelement
- 12a: umgeklappter Abschnitt
- 14: zweites Abdeckelement
- 16: Netzstruktur
- 22: Träger, Trägerplatte
- 28: Abstützelemente
- 29: Stützstege
- 30: Umgebungswandung
- 34: erstes Trägerelement
- 35: weiteres Trägerelement
- 36: Kühleinrichtung
- 38: Elektronikeinheit
- 39: Andockelement
- 42: Ferritsegment
- 44: elastische Elemente
- 52: Bodenelement
- 54: Deckelelement
- 56: Hitzeschutzelement
- 62: Leitungsrohr
- 64: Leitungsrohr
- 72: Wand
- 82: Bauraum
- 84: Bauraum

## Patentansprüche

1. Induktive Ladeanordnung (1) insbesondere zum induktiven Laden von Kraftfahrzeugen mit einer Spuleneinrichtung (2), mit einer benachbart zu der Spuleneinrichtung (2) angeordneten Ferritplattenanordnung (4), wobei an einer ersten Oberfläche (4a) der Ferritplattenanordnung (4) ein erstes diese Ferritplattenanordnung (4) abdeckendes Abdeckelement (12) angeordnet ist und an einer zweiten Oberfläche (4b) der Ferritplattenanordnung (4), welche der ersten Oberfläche der Ferritplattenanordnung (4) gegenüberliegt, ein zweites diese Ferritplattenanordnung (4) abdeckendes Abdeckelement (14) angeordnet ist, wobei die Ferritplattenanordnung (4) zwischen dem ersten Abdeckelement (12) und dem zweiten Abdeckelement (14) angeordnet ist, wobei das zweite Abdeckelement (14) zwischen der Ferritplattenanordnung (4) und der Spuleneinrichtung (2) verläuft, wobei die Ferritplattenanordnung eine Vielzahl von Segmenten aufweist, die bezüglich einander beweglich sind und das erste Abdeckelement (12) und das zweite Abdeckelement (14) aus einem Kautschuk hergestellt sind, wobei es sich bei dem Kautschuk um einen Butylkautschuk handelt, und wobei die Ladeanordnung eine Bodenplatte (52) und eine Deckelplatte (54) aufweist, wobei die Bodenplatte (52) in ihrem Inneren wenigstens einen Kanal zum Leiten eines Kühlmediums aufweist und die Deckelplatte (54) als Hitzeschutzelement ausgebildet ist.

2. Ladeanordnung (1) nach Anspruch 1, **dadurch gekennzeichnet, dass** beide Abdeckelemente (12, 14) elastisch ausgebildet sind.

3. Ladeanordnung (1) nach wenigstens einem der vorangegangenen Ansprüche, **dadurch gekennzeichnet, dass** zwischen der Spuleneinrichtung (2) und der Ferritplattenanordnung (4) eine Lastverteilplatte (35) angeordnet ist.

4. Ladeanordnung (1) nach wenigstens einem der vorangegangenen Ansprüche, **dadurch gekennzeichnet, dass** unterhalb der Ferritplattenanordnung (4) ein Träger (22) angeordnet ist.

5. Ladeanordnung (1) nach wenigstens einem der vorangegangenen Ansprüche, **dadurch gekennzeichnet, dass** oberhalb der Spuleneinrichtung (2) eine Lastverteilplatte (34) angeordnet ist

6. Ladeanordnung (1) nach wenigstens einem der vorangegangenen Ansprüche, **dadurch gekennzeichnet, dass** die Ladeanordnung (1) eine die Spuleneinrichtung (2) und/oder die Ferritplattenanordnung (4) in Umfangsrichtung umgebende Begrenzungswandung (30) aufweist.

7. Ladeanordnung (1) nach wenigstens einem der vorangegangenen Ansprüche, **dadurch gekennzeichnet, dass** die Ladeanordnung (1) eine Elektronikplatine (40) aufweist, welche benachbart zu der Spuleneinrichtung (2) angeordnet ist.

8. Ladeanordnung (1) nach wenigstens einem der vorangegangenen Ansprüche, **dadurch gekennzeichnet, dass** das erste Abdeckelement (12) und das zweite Abdeckelement (14) wenigstens abschnittweise unmittelbar miteinander in Kontakt stehen.

9. Ladeanordnung (1) nach wenigstens einem der vorangegangenen Ansprüche, **dadurch gekennzeichnet, dass** die Ladeanordnung Leitungsrohre (62, 64) zum Führen von elektrischen Leitungen aufweist.

## Claims

1. Inductive charging arrangement (1), in particular for the inductive charging of motor vehicles, having a coil device (2), having a ferrite plate arrangement (4) arranged adjacent to the coil device (2), wherein a first cover element (12) covering this ferrite plate arrangement (4) being arranged on a first surface (4a) of the ferrite plate arrangement (4), and a second cover element (14) covering this ferrite plate arrangement (4) being arranged on a second surface (4b) of the ferrite plate arrangement (4), which is opposite the first surface of the ferrite plate arrangement (4), wherein the ferrite plate arrangement being arranged between the first cover element (12) and the second cover element (14), wherein the second cover element (14) extends between the ferrite plate arrangement (4) and the coil device (2) , wherein the ferrite plate arrangement comprises a plurality of segments which are movable with respect to each other and the first cover element (12) and the second cover element (14) are made of a rubber, wherein the rubber is a butyl rubber, and wherein the charging arrangement has a bottom plate (52) and a cover plate (54), wherein the bottom plate (52) has at least one channel in its interior for conducting a cooling medium and the cover plate (54) is designed as a heat protection element.

2. Charging arrangement (1) according to claim 1,
**characterized in that**
preferably both cover elements (12, 14) are elastic.

3. Charging arrangement (1) according to at least one of the preceding claims,
**characterized in that**
a load distribution plate (35) is arranged between the coil device (2) and the ferrite plate arrangement (4).

4. Charging arrangement (1) according to at least one of the preceding claims,
**characterized in that**
a carrier (22) is arranged below the ferrite plate arrangement (4).

5. Charging arrangement (1) according to at least one of the preceding claims,
**characterized in that**
a load distribution plate (34) is arranged above the coil device (2).

6. Charging arrangement (1) according to at least one of the preceding claims,
**characterized in that**
the charging arrangement (1) has a boundary wall (30) surrounding the coil device (2) and/or the ferrite plate arrangement (4) in circumferential direction.

7. Charging arrangement (1) according to at least one of the preceding claims,
**characterized in that**
the charging arrangement (1) has an electronic circuit board (40) which is arranged adjacent to the coil device (2).

8. Charging arrangement (1) according to at least one of the preceding claims,
**characterized in that**
the first cover element (12) and the second cover element (14) are in direct contact with each other at least in sections.

9. Charging arrangement (1) according to at least one of the preceding claims,
**characterized in that**
the charging arrangement has cable conduits (62, 64) for guiding electrical lines.

## Revendications

1. Dispositif de charge inductif (1) en particulier pour la charge inductive de véhicules automobiles avec un dispositif de bobine (2), avec un ensemble de plaque de ferrite (4) agencé de manière contiguë au dispositif de bobine (2), dans lequel un premier élément de recouvrement (12) recouvrant cet ensemble de plaque de ferrite (4) est agencé au niveau d'une première surface (4a) de l'ensemble de plaque de ferrite (4) et un second élément de recouvrement (14) recouvrant cet ensemble de plaque de ferrite (4) est agencé au niveau d'une seconde surface (4b) de l'ensemble de plaque de ferrite (4) qui fait face à la première surface de l'ensemble de plaque de ferrite (4), dans lequel l'ensemble de plaque de ferrite est agencé entre le premier élément de recouvrement (12) et le second élément de recouvrement (14), dans lequel le second élément de recouvrement (14) s'étend entre l'ensemble de plaque de ferrite (4) et le dispositif de bobine (2), dans lequel l'ensemble de plaque de ferrite présente une pluralité de segments qui sont mobiles l'un par rapport à l'autre et le premier élément de recouvrement (12) et le second élément de recouvrement (14) sont fabriqués en un caoutchouc, dans lequel il s'agit pour le caoutchouc d'un caoutchouc de butyle, et dans lequel le dispositif de charge présente une plaque de fond (52) et une plaque de couvercle (54), dans lequel la plaque de fond (52) présente en son intérieur au moins un canal pour l'acheminement d'un fluide de refroidissement et la plaque de couvercle (54) est réalisée comme élément de protection thermique.

2. Dispositif de charge (1) selon la revendication 1,
**caractérisé en ce que**
les deux éléments de recouvrement (12, 14) sont réalisés de manière élastique.

3. Dispositif de charge (1) selon au moins l'une quelconque des revendications précédentes,
**caractérisé en ce que**
une plaque de distribution de charge (35) est agencée entre le dispositif de bobine (2) et l'ensemble de plaque de ferrite (4).

4. Dispositif de charge (1) selon au moins l'une quelconque des revendications précédentes,
**caractérisé en ce que**
un support (22) est agencé en dessous de l'ensemble de plaque de ferrite (4).

5. Dispositif de charge (1) selon au moins l'une quelconque des revendications précédentes,
**caractérisé en ce que**
une plaque de distribution de charge (34) est agencée au-dessus du dispositif de bobine (2).

6. Dispositif de charge (1) selon au moins l'une quelconque des revendications précédentes,
**caractérisé en ce que**
le dispositif de charge (1) présente une paroi de délimitation (30) entourant le dispositif de bobine (2) et/ou l'ensemble de plaque de ferrite (4) dans le sens périphérique.

7. Dispositif de charge (1) selon au moins l'une quelconque des revendications précédentes,
**caractérisé en ce que**
le dispositif de charge (1) présente une platine électronique (40) qui est agencée de manière contiguë au dispositif de bobine (2).

8. Dispositif de charge (1) selon au moins l'une quelconque des revendications précédentes,
**caractérisé en ce que**
le premier élément de recouvrement (12) et le second élément de recouvrement (14) sont en contact au moins par sections directement l'un avec l'autre.

9. Dispositif de charge (1) selon au moins l'une quelconque des revendications précédentes,
**caractérisé en ce que**
le dispositif de charge présente des tubes d'acheminement (62, 64) pour le guidage de câbles électriques.
